# EUROPEAN PATENT APPLICATION

(11) **EP 4 215 789 A1**
(43) Date of publication of application: **26.07.2023**
(21) Application number: 21868416.5
(22) Date of filing: 26.08.2021
(51) Int. Cl.: F16L 13/02

(54) **PIPE CONNECTING STRUCTURE, MULTI-WAY REVERSING VALVE AND AIR CONDITIONING SYSTEM**

(30) Priority: 21.09.2020 CN 202022081396 U; 04.12.2020 CN 202022893768 U
(71) Applicant: Zhejiang Dunan Artificial Environment Co., Ltd., Shaoxing Zhejiang 311835 (CN)
(72) Inventor: JIN, Huahai, Shaoxing, Zhejiang 311835 (CN); XUAN, Yongbin, Shaoxing, Zhejiang 311835 (CN)
(74) Representative: Petraz, Gilberto Luigi
(86) International application number: PCT/CN2021/114748
(87) International publication number: WO 2022/057588

(57) **Abstract**

A pipe connecting structure (10), a multi-way reversing valve (100) and an air conditioning system (101) are provided. The pipe connecting structure (10) is configured for connecting a valve body (20) with a third steel connecting pipe (40). The pipe connecting structure (10) includes a first steel connecting pipe (11), a second steel connecting pipe (12) and a metal pipe (13) which is connected between the first steel connecting pipe (11) and the second steel connecting pipe (12) and made is of a non-steel material. A ductility of the metal pipe (13) is better than that of the first steel connecting pipe (11) and the second steel connecting pipe (12). In the welding process of the valve body (20) and the third steel connecting pipe (40), the valve body (20) is not easily deformed.

## Description

### CROSS-REFERENCE TO RELATED APPLICATIONS

This application claims priority to Chinese patent application No. 202022893768.X, filed on December 4, 2020, and titled "PIPE CONNECTING STRUCTURE, MULTI-WAY VALVE AND AIR CONDITIONING DEVICE", and No. Chinese patent application NO. 202022081396.0, filed on September 21, 2020, and titled "HIGH-CAPACITY MULTI-WAY REVERSING VALVE". The contents of the above identified applications are hereby incorporated herein in their entireties by reference.

### TECHNICAL FIELD

The present invention relates to the field of refrigerating, in particular, to a pipe connecting structure, a multi-way reversing valve and an air conditioning system.

### BACKGROUND

A multi-way reversing valve is generally used in a heat pump-type air conditioner. The multi-way reversing valve changes a flow direction of the refrigerating agent by changing a flow channel of the refrigerating agent, so that functions of an indoor unit and an outdoor unit of the air conditioning system can be changed in winter and in summer, thereby achieving the function of refrigeration and heating.

Conventionally, the multi-way reversing valve includes a valve body. The valve body is fixedly provided with a first steel connecting pipe. The first steel connecting pipe is configured for connecting the third steel connecting pipe. However, in the process of connecting the first steel connecting pipe with the third steel connecting pipe, a tensile stress can be easily generated between the first steel connecting pipe and the third steel connecting pipe. The tensile stress can be transmitted to the valve body, and may lead to deformation of the valve body.

### SUMMARY

In view of above, it is necessary to provide a pipe connecting structure, a multi-way reversing valve and an air conditioning system, so as to solve the problem of valve body deformation in the process of connecting the valve body to the third steel connecting pipe by welding.

The present invention provides a pipe connecting structure. The pipe connecting structure is configured for connecting the valve body with the third steel connecting pipe. The pipe connecting structure includes a first steel connecting pipe, a second steel connecting pipe and a metal pipe. The metal pipe is connected between the first steel connecting pipe and the second steel connecting pipe and in communicate with the first steel connecting pipe and the second steel connecting pipe. The metal pipe is made of a non-steel material. A ductility of the metal pipe is greater than a ductility of the first steel connecting pipe and a ductility of the second steel connecting pipe. In this way, when a tensile stress generated by the first steel connecting pipe acts on the valve body, the metal pipe having the relatively good ductility can eliminates the performance of the tensile stress. Therefore, the valve body can be ensured not to be subjected to the tensile stress, which can prevent the problem of non-commutation of the multi-way reversing valve generated by jam of the piston caused by deformation of the valve body under the tensile stress.

In some embodiments of the present invention, both a hardness of the first steel connecting pipe and a hardness of the second steel connecting pipe are greater than a hardness of the metal pipe.

In some embodiments of the present invention, the metal pipe includes a large end and a small end. The small end of the metal pipe extends into the first steel connecting pipe and is connected to and in communication with the first steel connecting pipe by welding, and the large end of the metal pipe is connected to and in communication with the second steel connecting pipe by welding.

In some embodiments of the present invention, the metal pipe is connected to and in communication with the first steel connecting pipe by brazing, and a brazing filler metal for brazing is located at a slit between the metal pipe and the first steel connecting pipe. After being melted, brazing filler metal can effectively fill the slit between the metal pipe and the first steel connecting pipe, so as to ensure a welding air impermeability between the metal pipe and the first steel connecting pipe.

In some embodiments of the present invention, the second steel connecting pipe is connected to and in communication with the metal pipe by brazing, and a brazing filler metal for brazing is located at a slit between the second steel connecting pipe and the metal pipe. After being melted, brazing filler metal can effectively fill the slit between the metal pipe and the second steel connecting pipe, so as to ensure a welding air impermeability between the metal pipe and the second steel connecting pipe.

In some embodiments of the present invention, the metal pipe is made of a copper alloy.

In some embodiments of the present invention, the metal pipe is made of red copper. Since the hardness of the metal pipe is smaller than the hardness of the first steel connecting pipe and the hardness of the second steel connecting pipe and the ductility of the metal pipe is greater than the ductility of the first steel connecting pipe and the ductility of the second steel connecting pipe, the influence of the tensile stress can be eliminated.

In some embodiments of the present invention, along an axis of the first steel connecting pipe, a length of the metal pipe is greater than or equal to 20 millimetres and smaller than or equal to 100 millimetres. Therefore, a pipe material can be saved on the premise of meeting the requirement. When a length of the metal pipe is unduly small, defects of poor welding quality caused by a small inserting length of the metal pipe in a third party pipe may occur in the process of connecting with the third party pipe. When a length of the metal pipe is unduly large, a consumption of the pipe material is large, which is adverse to pipe material saving and production cost control.

In some embodiments of the present invention, an unilateral slit defined between an outer wall of the metal pipe and an inner wall of the first steel connecting pipe is greater than or equal to 0.02 millimetres and smaller than or equal to 0.5 millimetres. Since the slit between the metal pipe and the first steel connecting pipe is appropriately disposed, the melted brazing filler metal can permeate into the slit between the metal pipe and the first steel connecting pipe under the action of capillary action, so as to achieve the fixed connection between the metal pipe and the first steel connecting pipe and ensure a brazing quality.

In some embodiments of the present invention, an inner wall of the first steel connecting pipe is provided with a locating portion, and an end of the metal pipe near the first steel connecting pipe extends into the first steel connecting pipe and abuts against the locating portion. The locating portion can be configured for accurately controlling a depth of the metal pipe extending into the first steel connecting pipe in a positioning assembly process before a welding process.

In some embodiments of the present invention, a depth of the metal pipe extending into the first steel connecting pipe is greater than or equal to 2 millimetres and smaller than or equal to 10 millimetres. In this way, the depth of the metal pipe extending into the first steel connecting pipe can be appropriately controlled, and the pipe material can be saved under the premise of ensuring the welding quality.

In some embodiments of the present invention, the depth of the metal pipe extending into the first steel connecting pipe is defined as D, and the depth of the metal pipe extending into the first steel connecting pipe D is smaller than an axial length of the first steel connecting pipe.

The present disclosure further provides a multi-way reversing valve. The multi-way reversing valve includes a valve body and a pipe connecting structure. The valve body includes a valve body. The valve body is provided with a plurality of pipe connectors, and each of the plurality of pipe connectors is connected to an end of the first steel connecting pipe away from the metal pipe.

In some embodiments of the present invention, both ends of the valve body are provided with a first end cap and a second end cap, and both the first end cap and the second end cap are hermetically connected with the valve body.

In some embodiments of the present invention, the first end cap and the second end cap are provided with an exhaust unit, respectively. Both an exhaust unit of the first end cap and an exhaust unit of the second end cap are in communication with the valve body.

In some embodiments of the present invention, the multi-way reversing valve further includes a pilot valve connected to an in communication with the valve body. The pilot valve is provided with a first airway pipe being in communication with the exhaust unit of the first end cap and a second airway pipe being in communication with the exhaust unit of the second end cap, respectively. The first airway is in communication with a first cavity via the exhaust unit of the first end cap, and the second airway is in communication with a second cavity via the exhaust unit of the second end cap.

In some embodiments of the present invention, the first airway pipe is provided with a first connector, and the second airway pipe is provided with a second connector. The first connector is configured for connecting the pilot valve to the first airway pipe, and the second connector is configured for connecting the pilot valve to the second airway pipe.

The present disclosure further provides an air conditioning system, and the air conditioning system includes a third steel connecting pipe and a multi-way reversing valve.

Compared with the related art, in a pipe connecting structure, a multi-way reversing valve and an air conditioning system of the present disclosure, in a process of connecting a valve body to a third steel connecting pipe by welding, the valve body is connected to an end of the pipe connecting structure provided with a first steel connecting pipe by welding, the third steel connecting pipe is connected to an end of the pipe connecting structure provided with a second steel connecting pipe by welding, and a metal pipe is disposed between the first steel connecting pipe and the second steel connecting pipe. Therefore, a tensile stress generated in a process of connecting the third steel connecting pipe to the pipe connecting structure by welding will not transmit to the valve body, but firstly be transmitted to the metal pipe. Since a ductility of the metal pipe is greater than those of the first steel connecting pipe and the second steel connecting pipe, the metal pipe may be deformed under the action of the tensile stress, and the metal pipe may offset the tensile stress by the deformation of the metal pipe. Therefore, the tensile stress may not be transmitted to the valve body. That is, the valve body will not deform under the action of the tensile stress generated in the process of connecting the third steel connecting pipe to the pipe connecting structure by welding. Therefore, a problem of valve body deformation in the process of connecting the valve body to the third steel connecting pipe by welding in conventional art can be solved.

### BRIEF DESCRIPTION OF THE DRAWINGS

FIG. 1 is a stereo structural diagram of a pipe connecting structure in an embodiment of the present invention.
FIG. 2 is a structural schematic diagram of a multi-way reversing valve in an embodiment of the present invention.
FIG. 3 is a stereo structural diagram of a pipe connecting structure in another embodiment of the present invention.
FIG. 4 is a structural schematic diagram of a multi-way reversing valve in another embodiment of the present invention.

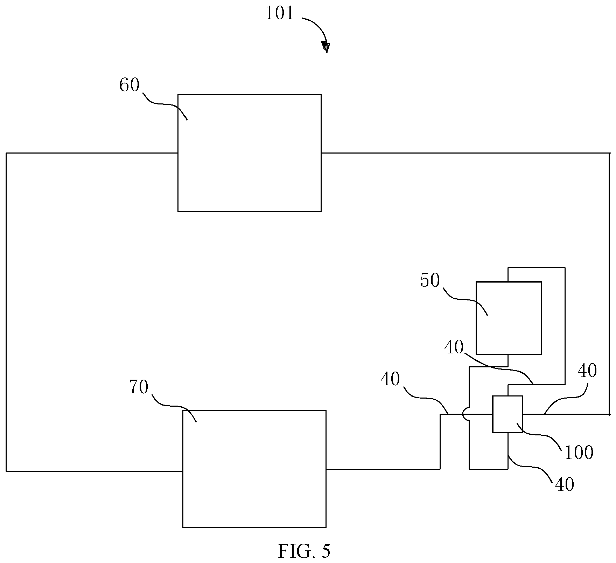

FIG. 5 is a structural schematic diagram of an air conditioning system in the present invention.

In the figures, 100 represents a multi-way reversing valve; 10 represents a pipe connecting structure; 11 represents a first steel connecting pipe; 111 represents a locating portion; 12 represents a second steel connecting pipe; 13 represents a metal pipe; 131 represents a large end; 132 represents a small end; 20 represents a valve body; 21 represents a pipe connector; 22 represents a first end cap; 23 represents a second end cap; 24 represents an exhaust unit; 30 represents a pilot valve; 31 represents a first airway pipe; 311 represents a first connector; 32 represents a second airway pipe; 321 represents a second connector; 101 represents an air conditioning system; 40 represents a third steel connecting pipe; 50 represents a compressor; 60 represents a first heat exchanger; and 70 represents a second heat exchanger.

### DETAILED DESCRIPTION

The technical solutions in the embodiments of the present invention will be clearly and completely described below in conjunction with the accompanying drawings in the embodiments of the present invention, and it is clear that the embodiments described are only a part of the embodiments of the present invention, but not all of them. Based on the embodiments in the present invention, all other embodiments obtained by a person of ordinary skill in the art without creative labour fall within the scope of protection of the present invention.

It is noted that when a component is said to be "disposed" on another component, it may be disposed directly on the other component or there may be a centred component. When a component is considered to be "mounted" on another component, it may be directly mounted on the other component or there may also be a centred component. When a component is considered to be "fixed" to another component, it may be fixed directly to the other component or a centred component may also be present.

Unless otherwise defined, all technical and scientific terms used herein have the same meaning as commonly understood by those skilled in the art belonging to the present invention. The terms used herein in the specification of the present invention are for the purpose of describing specific embodiments only and are not intended to limit the present invention. The term "and/or" as used herein includes any and all combinations of one or more of the relevant listed items.

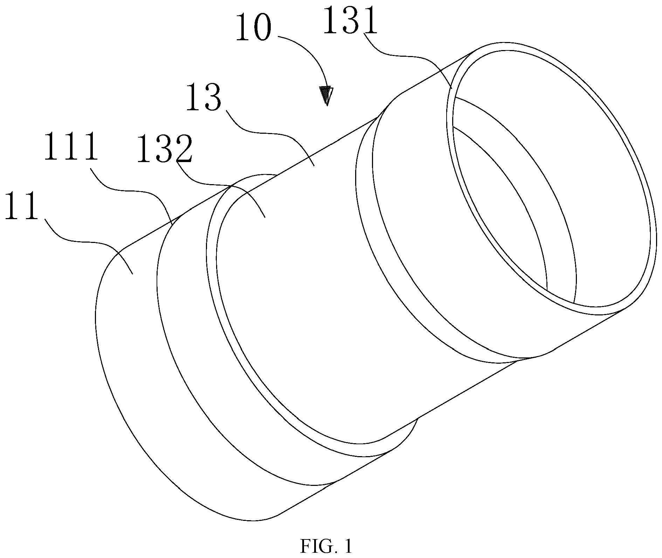

Referring to FIG. 1, the present invention provides a multi-way reversing valve 10. The multi-way reversing valve 100 is mounted on a pipeline of an air conditioning system 101, and configured for controlling opening and/or closing of the pipeline and a flow direction of a medium in the pipeline.

The multi-way reversing valve 100 is mainly applied in a heat pump-type air conditioner. By electrically controlling opening and/or closing of an electromagnetic coil, the multi-way reversing valve 100 is mainly configured for guiding a flow direction change of a high pressure gas of the air conditioning system in the multi-way reversing valve 100, so as to change a pressure difference between both end of a piston and make the piston move in the multi-way reversing valve 100. Therefore, a relative relationship between a piston channel and an external multi-way connecting pipe of the multi-way reversing valve is changed, so that a flow direction of the refrigerating agent in the system is changed, thereby achieving switching between refrigeration and heating of the air conditioning system. The multi-way reversing valve 100 can be a high-capacity four-way reversing valve, a high-capacity five-way reversing valve, and the like.

The multi-way reversing valve 100 includes a pipe connecting structure 10 and a valve body 20. Specifically, the valve body 20 is provided with a plurality of pipe connectors 21, and each of the plurality of pipe connectors 21 is fixed to the pipe connecting structure 10.

In some embodiments, the pipe connecting structure 10 can be connected to the pipe connector 21 by brazing. Thus, the joint can have a bright and smooth surface, an air impermeability of the welding is improved, and stability of shape and size of the product can be improved.

The present invention further provides a pipe connecting structure 10. The pipe connecting structure 10 is configured for connecting the valve body 20 with the third steel connecting pipe 40. The pipe connecting structure 10 includes a first steel connecting pipe 11, a second steel connecting pipe 12 and a metal pipe 13. The metal pipe 13 is connected between and communicated with the first steel connecting pipe 11 and the second steel connecting pipe 12. The metal pipe 13 is made of a non-steel material. A ductility of the metal pipe is greater than a ductility of the first steel connecting pipe 11 and a ductility of the second steel connecting pipe 12.

In some embodiments, the third steel connecting pipe 40 is a connecting pipe of the air conditioning system 101. By connecting the third steel connecting pipe 40 with the second steel connecting pipe 12, the multi-way reversing valve 100 can be connected to the air conditioning system 101.

A ductility is a mechanical property of a material, which represents a performance of plastic deformation before cracking of a material under an action of a stress. The better the ductility of the material is, the greater the deformation performance of the material is. Therefore, in a process of connecting the valve body 20 to the third steel connecting pipe 40 by welding, the valve body 20 can be connected to an end of the pipe connecting structure 10 provided with the first steel connecting pipe 11, the third steel connecting pipe 40 can be connected to an end of the pipe connecting structure 10 provided with a second steel connecting pipe 12, and the metal pipe 13 can be disposed between the first steel connecting pipe 11 and the second steel connecting pipe 12. Therefore, a tensile stress generated in a process of connecting the third steel connecting pipe 40 with the pipe connecting structure 10 will not be transmitted to the valve body 20, but transmitted to the metal pipe 13. In addition, since a ductility of the metal pipe 13 is greater than those of the first steel connecting pipe 11 and the second steel connecting pipe 12, the metal pipe 13 may be deformed under the action of the tensile stress, and the metal pipe 13 may offset the tensile stress by the deformation of the metal pipe 13. Therefore, the tensile stress may not be transmitted to the valve body 20. That is, the valve body 20 will not deform under the action of the tensile stress generated in the process of connecting the third steel connecting pipe 40 to the pipe connecting structure 10 by welding. Therefore, a problem of deformation of valve body 20 in the process of connecting the valve body 20 to the third steel connecting pipe 40 by welding in conventional art can be solved.

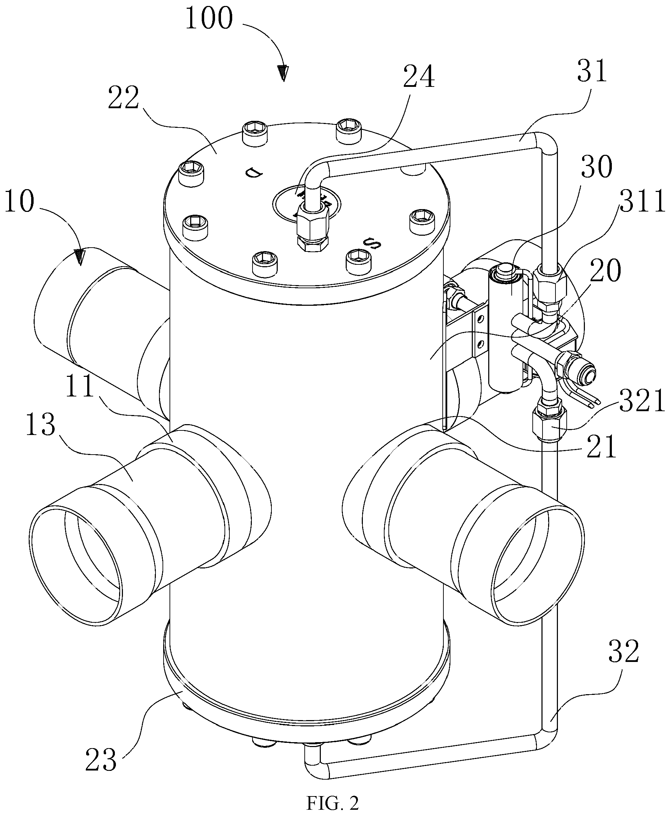

In some embodiments, referring to FIG. 1 and FIG. 2, the metal pipe 13 can include a large end 131 and a small end 132. The small end 132 of the metal pipe 13 can extend into the first steel connecting pipe 11 and be connected to and in communication with the first steel connecting pipe 11 by welding, and the large end 131 of the metal pipe 13 can be sleeved on the second steel connecting pipe 12 and be connected to and in communication with the second steel connecting pipe 12 by welding.

It should be noted that since the small end 132 of the metal pipe 13 extends into the first steel connecting pipe 11, a connection between the first steel connecting pipe 11 and the metal pipe 13 can be more firm. In addition, in a process of connecting the first steel connecting pipe 11 with the metal pipe 13 by welding, the melted welding flux can flow into a slit between the first steel connecting pipe 11 and the metal pipe 13, thereby facilitating connecting the first steel connecting pipe 11 to the metal pipe 13 by welding. Since the large end 131 of the metal pipe 13 is sleeved on the second connecting pipe 12, a connection between the second steel connecting pipe 12 and the metal pipe 13 can be more firmly. In addition, in the process of connecting the second steel connecting pipe 12 to the metal pipe 13 by welding, the melted welding flux can flow into a slit between the second steel connecting pipe 12 and the metal pipe 13, thereby facilitating connecting the second steel connecting pipe 12 to the metal pipe 13 by welding.

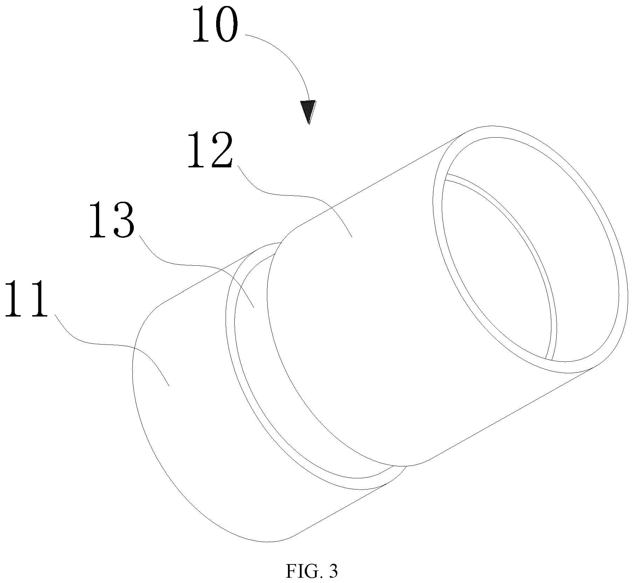

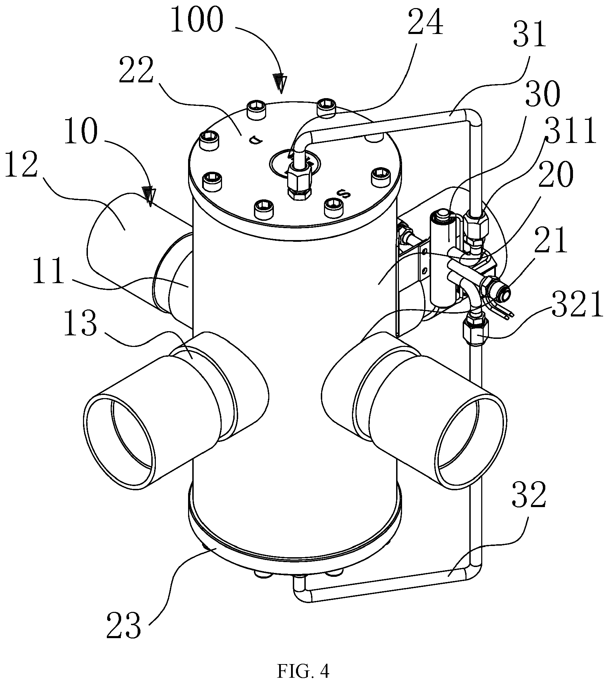

In some embodiments, referring to FIG. 3 and FIG. 4, an end of the metal pipe 13 near the first steel connecting pipe 11 can extend into the first steel connecting pipe 11 and connected to the first steel connecting pipe 11 by welding. An end of the metal pipe 13 near the second connecting pipe 12 can extend into a second steel connecting pipe 12, and be connected to and in communication with the second steel connecting pipe 12 by welding. Therefore, the first steel connecting pipe 11, the metal pipe 13 and the second steel connecting pipe 12 can be firmly connected and in communication with each other.

In some embodiments, the small end 132 of the metal pipe 13 can extend into the first steel connecting pipe 11, and be connected to and in communication with the first steel connecting pipe 11 by welding. The large end 131 of the metal pipe 13 can be sleeved on the third steel connecting pipe 40, and be connected to and in communication with the third steel connecting pipe 40 by welding. Therefore, the first steel connecting pipe 11, the metal pipe 13 and the third steel connecting pipe 40 can be firmly connected and in communication with each other.

In some embodiments, the small end 132 of the metal pipe 13 can extend into the first steel connecting pipe 11, and be connected to and in communication with the first steel connecting pipe 11 by welding. The large end 131 of the metal pipe 13 can extend into the third steel connecting pipe 40, and be connected to and in communication with the third steel connecting pipe 40 by welding. Therefore, the first steel connecting pipe 11, the metal pipe 13 and the third steel connecting pipe 40 can be firmly connected and in communication with each other.

Furthermore, both the first steel connecting pipe 11 and the second steel connecting pipe 12 can be connected to the metal pipe 13 by method of brazing. A temperature of the brazing process can be around 800 degrees centigrade. The brazing filler metal for brazing can be disposed at a slit between the first steel connecting pipe 11 and the metal pipe 13 and a slit between the second steel connecting pipe 12 and the metal pipe 13. The melted brazing filler metal can effectively fill the slit between the metal pipe 13 and the first steel connecting pipe 11, so as to ensure the welding air impermeability between the metal pipe 13 and the first steel connecting pipe 11.

In some embodiments, a method for welding can be methods such as fusion welding, pressure welding, and the like, which is not limited herein.

It should be noted that if the second steel connecting pipe 12 is also connected to the third steel connecting pipe 40 by brazing, a welding quality of a welding line of the first welding process may be affected since temperatures of the two brazing processes are close. Therefore, in the present embodiment, the third steel connecting pipe 40 can be connected to the air conditioning system by fusion welding, and the welding line of the first brazing process will not be affected.

A brazing process is a welding method. In the brazing process, a brazing filler metal having a melting point lower than that of a weldment is heated to the melting point of the brazing filler metal at the same time, a liquid state brazing filler metal can fill slits between the weldments and connect the weldments by welding. Compared with other welding methods, in the brazing process, surfaces of the first steel connecting pipe 11, the second steel connecting pipe 12 and the metal pipe 13 can be more smooth and brighter, which facilitates overall aesthetics of the pipe connecting structure 10. In addition, the brazing process can be used for connecting the same metal, different metals, and a part of non-metals. Therefore, in the brazing process, microstructure changes and property changes of the first steel connecting pipe 11, the second steel connecting pipe 12 and the metal pipe 13 can be slight. That is, the microstructure and the properties of the first steel connecting pipe 11, the second steel connecting pipe 12 and the metal pipe 13 can be more stable.

In some embodiment, the metal pipe 13 can be made of a copper alloy. The copper alloy is an alloy formed by adding one or a plurality of other elements to pure copper as a base. The metal pipe 13 made of the copper alloy had relatively good ductility, and the copper alloy can be more easily achieved, which can facilitate lowering the production cost of the pipe connecting structure 10. In some embodiment, the metal pipe 13 can be made of other materials meeting the requirements, which is not limited herein.

In some embodiment, the metal pipe 13 can be made of red copper. The pure copper is a copper material having a pretty high purity. A ductility of the red copper is pretty good. Therefore, the metal pipe 13 made of the red copper can offset the tensile stress generated in the process of connecting the steel connecting pipe to the pipe connecting structure 10 by welding to the greatest extent.

In some embodiments, both a hardness of the first steel connecting pipe 11 and a hardness of the second steel connecting pipe 12 can be greater than a hardness of the metal pipe 13. A hardness is a comprehensive index that shows a combination of physical quantities of a material such as elasticity, plasticity, deformation strengthening, strength and toughness and the like. Generally, hardness represents an ability of a metal to resist deformation within a local volume on its surface. The lower the hardness of the metal pipe 13 is, the easier the surface of the metal pipe 13 may occur a plastic deformation, which is more beneficial for the metal pipe 13 to offset the tensile stress generated in the process of connecting the third steel connecting pipe 40 to the pipe connecting structure 10 by welding by the plastic deformation of the metal pipe 13.

In some embodiments, along an axis of the first steel connecting pipe 11, a length of the metal pipe 13 can be greater than or equal to 20 millimetres and smaller than or equal to 100 millimetres, which can facilitate a fixed connection between the metal pipe 13 and the first steel connecting pipe 11 and a fixed connection between the metal pipe 13 and the second steel connecting pipe 12. Since the length of the metal pipe 13 is smaller than or equal to 100, not only excessive large deformation of the pipe connecting structure 10 that affects the assembly effect of the air conditioning device caused by undue long metal pipe can be avoided, but also large material consumption of the metal pipe 13 that is adverse to material saving and production cost controlling can be avoided.

In the present embodiment, the length of the metal pipe 13 can be 20 millimetres, 30 millimetres, 40 millimetres, 50 millimetres, 60 millimetres, 70 millimetres, 80 millimetres, 90 millimetres or 100 millimetres. In some embodiment, the length of the metal pipe 13 can be 60 millimetres, which is not limited herein.

In some embodiment, an unilateral slit defined between an outer wall of the metal pipe 13 and an inner wall of the first steel connecting pipe 11 can be greater than or equal to 0.02 millimetres and smaller than or equal to 0.5 millimetres. Since the slit between the metal pipe 13 and the first steel connecting pipe 11 can be appropriately disposed, the melted brazing filler metal can permeate into the slit between the metal pipe 13 and the first steel connecting pipe 11 under the action of capillary action, so as to achieve the fixed connection between the metal pipe 13 and the first steel connecting pipe 11 and ensure a brazing quality.

In the present embodiment, the unilateral slit defined between the outer wall of the metal pipe 13 and the inner wall of the first steel connecting pipe 11 can be 0.02 millimetres, 0.05 millimetres, 0.1 millimetres, 0.2 millimetres, 0.3 millimetres, 0.4 millimetres, or 0.5 millimetres. In some embodiments, the unilateral slit defined between the outer wall of the metal pipe 13 and the inner wall of the first steel connecting pipe 11 can be 0.1 millimetres, which is not limited herein.

Specifically, a depth of the metal pipe 13 extending into the first steel connecting pipe 11 can be greater than or equal to 2 millimetres and smaller than or equal to 10 millimetres. In this way, the depth of the metal pipe 13 extending into the first connecting pipe 11 can be appropriately controlled, and the pipe material can be saved under the premise of ensuring the welding quality.

In the present embodiment, the depth of the metal pipe 13 extending into the first steel connecting pipe 11 can be 2 millimetres, 4 millimetres, 6 millimetres, 8 millimetres, or 10 millimetres. In some embodiments, the depth of the metal pipe 13 extending into the first steel connecting pipe 11 can be 4 millimetres, which is not limited herein.

It should be noted that the depth of the metal pipe 13 extending into the first steel connecting pipe 11 should be smaller than an axial length of the first steel connecting pipe 11.

In some embodiments, an inner wall of the first steel connecting pipe 11 can be provided with a locating portion 111, and an end of the metal pipe 13 near the first steel connecting pipe 11 can extend into the first steel connecting pipe 11 and abut against the locating portion 111. The locating portion 111 can be configured for accurately controlling a depth of the metal pipe 13 extending into the first steel connecting pipe 11 in a positioning assembly process before a welding process.

Referring to FIG. 1 and FIG. 2, the multi-way reversing valve 100 can further include a pilot valve 30. Both ends of the valve body 20 can be provided with a first end cap 22 and a second end cap 23, and both the first end cap 22 and the second end cap 23 can be hermetically connected with the valve body 20 to prevent leakage of the medium. Both the first end cap 22 and the second end cap 23 can be provided with an exhaust unit 24. The exhaust unit 24 is capable of being closed. The valve body 20 can be further provided with a piston (not shown). The valve body 20, the piston and the second end cap 23 can be surrounded to define a second cavity. The pilot valve 30 can be provided with a first airway pipe 31 being in communication with the first end cap 22 and a second airway pipe 32 being in communication with the second end cap 23, respectively. The first airway pipe 31 can be in communication with a first cavity via the exhaust unit 24 of the first end cap 22, and the second airway 32 can be in communication with a second cavity via the exhaust unit 24 of the second end cap 23.

Referring to FIG. 1, the first airway pipe can be provided with a first connector 311, and the second airway pipe 32 can be provided with a second connector 321. The first connector 311 can be configured for connecting the pilot valve 30 to the first airway pipe 31, and the second connector 321 can be configured for connecting the pilot valve 30 to the second airway pipe 32.

In a multi-way reversing valve 100 of the present invention, each of the plurality of pipe connecting structures 10 mounted on each of the plurality of pipe connectors of the valve body 20 can include a first steel connecting pipe 11, a second steel connecting pipe 12 and a metal pipe 13. The metal pipe 13 can be connected between and communicated with the first steel connecting pipe 11 and the second steel connecting pipe 12. The metal pipe 13 can be made of a non-steel material. An end of the first steel connecting pipe 11 can extend into a corresponding pipe connector 21 and fixed to the valve body 20. A small end 132 of the metal pipe 13 can extend into an end of the first steel connecting pipe 11 away from the valve body 20, and connected to the first steel connecting pipe 11 by welding. A large end 131 of the metal pipe 13 can be sleeved on the second steel connecting pipe 12 and connected to the second steel connecting pipe 12 by welding. When the multi-way reversing valve 100 is connected to a third steel connecting pipe 40, a tensile stress generated in a process of connecting the multi-way reversing valve 100 to the third steel connecting pipe 40 is applied on the valve body 20, the tensile stress may be offset by extending the metal pipe 13, so as to ensure that the valve body 20 will not suffer from the tensile stress, and prevent the problem of non-commutation of the multi-way reversing valve 100 generated by jam of the piston caused by deformation of the valve body 20 under the tensile stress.

The present invention further provides an air conditioning system 101. The air conditioning system 101 can include a third steel connecting pipe 40 and a multi-way reversing valve 100.

Specifically, the air conditioning system 101 can include a compressor 50, a first heat exchanger 60 and a second heat exchanger 70. A high-pressure side of the multi-way reversing valve 10 can be connected to the first heat exchanger 60 and an air outlet of the compressor 50, respectively. A low-pressure side of the multi-way reversing valve 100 can be connected to the second heat exchanger 70 and an air inlet of the compressor 50, respectively.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

A person of ordinary skill in the art should recognize that the above embodiments are intended to illustrate the present application only and are not intended to limit the present application, and that appropriate changes and variations to the above embodiments fall within the scope of protection claimed herein, so long as they are within the substantial spirit of the present application.

## Claims

1. A pipe connecting structure configured for connecting a valve body with a third steel connecting pipe, **characterized by** comprising a first steel connecting pipe, a second steel connecting pipe and a metal pipe, wherein the metal pipe is connected between the first steel connecting pipe and the second steel connecting pipe and in communication with the first steel connecting pipe and the second steel connecting pipe, the metal pipe is made of a non-steel material, and a ductility of the metal pipe is greater than a ductility of the first steel connecting pipe and a ductility of the second steel connecting pipe.

2. The pipe connecting structure of claim 1, wherein both a hardness of the first steel connecting pipe and a hardness of the second steel connecting pipe are greater than a hardness of the metal pipe.

3. The pipe connecting structure of claim 1, wherein the metal pipe comprises a large end and a small end, the small end of the metal pipe extends into the first steel connecting pipe and is connected to and in communication with the first steel connecting pipe by welding, and the large end of the metal pipe is connected to and in communication with the second steel connecting pipe by welding.

4. The pipe connecting structure of claim 1, wherein the metal pipe is connected to and in communication with the first steel connecting pipe by brazing, and a brazing filler metal for brazing is located at a slit between the metal pipe and the first steel connecting pipe.

5. The pipe connecting structure of claim 1, wherein the second steel connecting pipe is connected to and in communication with the metal pipe by brazing, and a brazing filler metal for brazing is located at a slit between the second steel connecting pipe and the metal pipe.

6. The pipe connecting structure of claim 1, wherein the metal pipe is made of a copper alloy.

7. The pipe connecting structure of claim 6, wherein the metal pipe is made of red copper.

8. The pipe connecting structure of claim 1, wherein along an axis of the first steel connecting pipe, a length of the metal pipe is greater than or equal to 20 millimetres and smaller than or equal to 100 millimetres.

9. The pipe connecting structure of claim 1, wherein an unilateral slit defined between an outer wall of the metal pipe and an inner wall of the first steel connecting pipe is greater than or equal to 0.02 millimetres and smaller than or equal to 0.5 millimetres.

10. The pipe connecting structure of claim 1, an inner wall of the first steel connecting pipe is provided with a locating portion, and an end of the metal pipe near the first steel connecting pipe extends into the first steel connecting pipe and abuts against the locating portion.

11. The pipe connecting structure of claim 1, wherein a depth of the metal pipe extending into the first steel connecting pipe is greater than or equal to 2 millimetres and smaller than or equal to 10 millimetres.

12. The pipe connecting structure of claim 11, wherein the depth of the metal pipe extending into the first steel connecting pipe is smaller than an axial length of the first steel connecting pipe.

13. A multi-way reversing valve, **characterized by** comprising the valve body, and the pipe connecting structure of any one of claims 1 to 12, wherein the valve body is provided with a plurality of pipe connectors, and each of the plurality of pipe connectors is connected to an end of the first steel connecting pipe away from the metal pipe.

14. The multi-way reversing valve of claim 13, wherein both ends of the valve body are provided with a first end cap and a second end cap, and both the first end cap and the second end cap are hermetically connected with the valve body.

15. The multi-way reversing valve of claim 14, wherein the first end cap and the second end cap are provided with an exhaust unit, respectively, and both an exhaust unit of the first end cap and an exhaust unit of the second end cap are in communication with the valve body.

16. The multi-way reversing valve of claim 15, further comprising a pilot valve connected to and in communication with the valve body,
wherein the pilot valve is provided with a first airway pipe being in communication with the exhaust unit of the first end cap and a second airway pipe being in communication with the exhaust unit of the second end cap, respectively,
the first airway is in communication with a first cavity via the exhaust unit of the first end cap, and the second airway is in communication with a second cavity via the exhaust unit of the second end cap.

17. The multi-way reversing valve of claim 16, wherein the first airway pipe is provided with a first connector, the second airway pipe is provided with a second connector, the first connector is configured for connecting the pilot valve to the first airway pipe, and the second connector is configured for connecting the pilot valve to the second airway pipe.

18. An air conditioning system, **characterized by** comprising a third steel connecting pipe and the multi-way reversing valve of any one of claims 13 to 17.
